# EUROPÄISCHE PATENTSCHRIFT

(11) **EP 0 760 782 B1**
(45) Veröffentlichungstag und Bekanntmachung des Hinweises auf die Patenterteilung: **02.09.1998**
(21) Anmeldenummer: 95921819.9
(22) Anmeldetag: 02.06.1995
(51) Int. Cl.: B65B 55/02, B65B 31/02

(54) **ABFÜLLANLAGE FÜR GEFÄHRLICHE SCHÜTT- ODER FLIESSFÄHIGE MEDIEN**
FILLING INSTALLATION FOR HAZARDOUS POURABLE OR FLUID SUBSTANCES
INSTALLATION DE REMPLISSAGE POUR MILIEUX DANGEREUX COULANTS OU FLUIDES

(30) Priorität: 02.06.1994 DE 4419333
(43) Veröffentlichungstag der Anmeldung: 12.03.1997
(73) Patentinhaber: HELPMAN VERFAHRENSTECHNIK GMBH, 88239 Wangen (DE)
(72) Erfinder: BOLZ, Volker, D-88239 Wangen (DE); BOLZ, Jürgen, D-88239 Wangen (DE)
(74) Vertreter: Riebling, Peter, Dr.-Ing.
(86) Internationale Anmeldenummer: EP9502103
(87) Internationale Veröffentlichungsnummer: WO9533650

(56) Entgegenhaltungen:
- EP-A- 0 088 735
- EP-A- 0 096 336
- EP-A- 0 267 560
- EP-A- 0 366 269
- EP-A- 0 570 946
- WO-A-91/15401

## Beschreibung

Die Erfindung betrifft eine Abfüllanlage nach dem Oberbegriff des Patentanspruchs 1. Eine derartige Abfüllanlage ist mit der auf den gleichen Anmelder zurückgehenden EP 0 521 252 A1 bekannt geworden.

Bei dieser bekannten Abfüllanlage wird ein sogenanntes Zweikammer-System beschrieben, wobei in einen oberen Handschuhkasten eine Dosiereinrichtung mündet und der Handschuhkasten eine untere Öffnung aufweist, an die sich eine zweite Kammer anschließt.

Im Bereich dieser zweiten Kammer ist ein zu befüllender Sack angeordnet, der durch Eingriff in die Handschuhöffnungen des Handschuhkastens aus der unteren Kammer nach oben durch die Öffnung gezogen wird und dann an dem in die obere Kammer (Handschuhkasten) einmündenden Füllkopf abdichtend angeschlossen wird.

Es handelt sich also um ein Zweikammer-System, welches zum Abfüllen gefährlicher schütt- oder fließfähiger Medien bestimmt war, ohne daß der Bediener mit diesen Medien in Berührung kam. Außerdem wurde durch Unterdruck in dem Handschuhkasten und in der unteren Kammer dafür gesorgt, daß gefährliche Medien nicht in die Umgebung außerhalb der beiden Kästen gelangen konnten.

Mit dieser bekannten Abfüllanlage ist jedoch das Abfüllen unter Reinraumbedingungen nicht möglich. Unter Reinraumbedingungen werden hierbei Bedinungen verstanden, bei denen nach dem US-Gesetz "Federal Standard 209" gefordert wird, bei der in einer Kammer ein Überdruck herrschen soll und in dieser Kammer eine bestimmte Anzahl Fremdpartikel enthalten sein darf, so daß also der überwiegende Anteil der in dieser Kammer befindlichen Luft Reinraumluft ist, bei der die Anzahl der Fremdpartikel genau begrenzt ist.

Durch die EP-A-0 096 336 ist eine Abfüllvorrichtung mit einer abgeschlossenen, unter Reinraumbedingungen gehaltenen Kammer, wobei dieser Reinraum von einer laminaren Luftströmung durchströmt wird, welcher die Reinluftbedingung sicherstellt, bekannt. Nachteilig ist bei dieser Vorrichtung insbesondere anzusehen, daß aufgrund der Fülleinrichtung-Ausbildung ein Austritt von Partikeln des abzupackenden Stoffes beim Abfüllvorgang und damit eine Kontaminierungsgefahr des Bedienungspersonals nicht ausgeschlossen werden kann.

Bisher war es lediglich bekannt, derartige Abfüllanlagen in sogenannten Reinlufträumen anzuordnen, welches zimmergroße Räume waren, in denen die Bedienungsperson mit anwesend war, um unter Zuhilfenahme dieser Bedienungsperson derartige Medien unter den genannten Bedingungen abfüllen zu können. Damit bestand aber der Nachteil, daß durch die Anwesenheit der Bedienungsperson selbst in dem Reinluftraum eine starke Kontaminierungsgefahr in dem Reinraum bestand, weil die Fremdpartikel in der Regel durch die Bedienungsperson selbst eingetragen werden.

Der Erfindung liegt die Aufgabe zugrunde, eine Abfüllanlage der eingangs genannten Art so weiterzubilden, daß unter Reinluftbedingungen gefährliche oder nichtgefährliche, schutt- oder fließfähige Medien unter Ausschluß einer Kontaminierungsgefahr des Bedienungspersonals abgefüllt werden können.

Zur Lösung der gestellten Aufgabe ist die Erfindung durch die technische Lehre des Anspruchs 1 gekennzeichnet.

Wesentliches Merkmal der Erfindung ist, daß das Medium transportierende Füllrohr des in dem, mit einem Überdruck versehenden Handschuhfaches von einer Laminarströmung von Reinluft umströmten Füllkopfes von der Absaugvorrichtung radial umgeben ist.

Mit der gegebenen technischen Lehre wird also der wesentliche Vorteil erzielt, daß bei dem Abfüllvorgang ein Austreten von Partikeln des abzupackenden Stoffes zuverlässig vermieden wird, und somit die Kontaminierungsgefahr der Bedienungsperson reduziert wird, wobei nun auf engstem Raum, nämlich nur dort, wo die Reinluftbedingungen benötigt werden, Reinluftbedingungen erzeugt werden, weil die Bedienungsperson selbst außerhalb des Handschuhkasten ist und lediglich über entsprechende Bedienungsöffnungen, die hermetisch abgedichtet sind, in den Handschuhkasten hineingreift. Dadurch wird eine Kontaminierung des Innenraumes des Handschuhkastens auf jeden Fall vermieden, und es werden Reinluftbedingungen um den Füllkopf herum gewährleistet.

Damit ist es nun erstmals möglich, mit relativ kostengünstigen Bedingungen schütt- oder fließfähige Medien (die gefährlich oder nicht gefährlich sein können) abzufüllen, wobei unterhalb des Handschuhkastens eine verschließbare Öffnung vorhanden ist, durch welche hindurch das abzufüllende Medium unter Reinluftbedingungen in einen Sack oder einen Behälter geleitet wird.

Hierbei ist wesentlich, daß diese Öffnung stets verschlossen bleibt, solange der zu befüllende Sack oder der zu befüllende Behälter noch nicht abgedichtet an dem Füllkopf angeschlossen ist. Erst wenn ein absolut dichter Anschluß des zu befüllenden Behälters oder Sackes an dem Füllkopf erreicht wird, wird der Handschuhkasten im Bereich der unteren Öffnung geöffnet, und es wird bei geöffnetem Handschuhkasten der zu befüllende Behälter oder Sack befüllt, wobei ständig die beschriebene laminare Strömung in dem Handschuhkasten aufrechterhalten wird.

In einer bevorzugten Ausgestaltung der vorliegenden Erfindung ist es vorgesehen, daß die laminare Strömung im Handschuhkasten dadurch erzeugt wird, daß mehrere hintereinander angeordnete Filter angeordnet sind, welche in ihrer Größe den Querschnitt des Handschuhkastens ausfüllen, so daß über die gesamte Länge des Handschuhkastens eine gleichbleibende laminare Strömung erzeugt wird, die bevorzugt horizontal gerichtet ist und in deren Verlauf der Füllkopf angeordnet ist.

Eine derartige Filteranordnung kann bevorzugt aus einem Hauptfilter bestehen, dem ein Vorfilter vorgeschaltet ist, wobei an der gegenüberliegenden Längsseite des Handschuhkastens ein Abluftfilter vorhanden ist, über welchen die laminare Strömung abgesaugt wird und im Umluftverfahren wieder zurück an die Einblasstelle des Handschuhkastens geführt wird. Es ist hierbei möglich, zu der im Kreislauf geführten Umluft Frischluft beizumengen, wobei die Beimengung der Frischluft den jeweiligen Erfordernissen angepasst wird.

Statt der beschriebenen, horizontalen laminaren Luftströmung im Handschuhkasten ist es in einer Weiterbildung der Erfindung vorgesehen, daß die Filter vertikal angeordnet sind, so daß eine vertikal gerichtete laminare Luftströmung im Handschuhkasten erzeugt wird, wobei hierbei wesentlich ist, daß diese Strömung ebenfalls laminar den Füllkopf umgibt.

Die vorliegende Erfindung betrifft noch einen weiteren Erfindungsgegenstand, nämlich eine besondere Ausbildung eines Füllkopfes.

Beim Stand der Technik war es nämlich erforderlich, durch manuellen Eingriff in den Handschuhkasten einen Sack an den im Handschuhkasten angeordneten Füllkopf heranzuführen und zu befestigen, um ein Abfüllen dieses Sackes überhaupt zu ermöglichen. Ein Abfüllen von festen Behältern, Containern oder dgl. war nicht möglich.

Es ist zwar bekannt, eine Befüllung von feststehenden Behältern, Containern und dergleichen nach dem sogenannten Doppeltürprinzip zu bewerkstelligen, was bedeutet, daß am Füllkopf ein erster Verschluß vorhanden ist und der zu befüllende Container mit einem zweiten Verschluß versehen ist. Die beiden Verschlüsse wurden über eine entsprechende Schnellschlußvorrichtung miteinander verbunden. Sie wurden dann entfernt und dann in den sich bildenden Zwischenraum zwischen dem Füllkopf und dem zu befüllenden Behälter wurde ein Füllrohr gefahren, um den Behälter zu befüllen. Bei dieser bekannten Abfülltechnik bestand der Nachteil, daß die Anordnung von derartigen Verschlußdeckeln in Verbindung mit Schnellverschlüssen aufwendig war und nicht für großbauende, relativ große Abfüllmengen aufnehmende Container geeignet war.

Der Erfindung liegt deshalb die weitere Aufgabe zugrunde, eine derartige Abfüllanlage so weiterzubilden, daß mit relativ geringem Aufwand ein Doppelverschlußprinzip bewerkstelligt werden kann, ohne daß man Schnellverschlüsse zwischen den zu verbindenden Verschlußdeckeln benötigt.

Wesentliches Merkmal dieser technischen Lehre ist, daß am Füllkopf ein heb- und senkbar ausgebildetes Teleskoprohr angeordnet ist, welches abdichtend auf einen Verschlußdeckel in einer Kammer bewegbar ist und mit diesem Verschlußdeckel koppelbar ist, wobei der Verschlußdeckel der Kammer und der Verschlußdeckel des zu befüllenden Behälters miteinander verbindbar sind. Dadurch ergibt sich ein neuartiges Verfahren, das ohne manuelle Unterstützung abläuft.

Wesentliches Merkmal dieses Erfindungsteiles ist also das vertikal bewegbare Teleskoprohr, welches den Füllkopf radial umgibt und welches heb- und senkbar in Bezug zum feststehenden Füllkopf ausgebildet ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen, ein schließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert ein Handschuhkasten nach der Erfindung mit Reinluftbedingungen in einem ersten Verfahrenszustand,
- Figur 2:: der Handschuhkasten nach Figur 1 in einem zweiten Verfahrenszustand,
- Figur 3:: die Anordnung eines neuartigen Füllkopfes in Verbindung mit einem Handschuhkasten nach den Figuren 1 und 2,
- Figur 4:: ein zweiter Verfahrensschritt im Vergleich zu Figur 3,
- Figur 5:: ein dritter Verfahrensschritt,
- Figur 6:: ein vierter Verfahrensschritt,
- Figur 7:: ein fünfter Verfahrensschritt,
- Figur 8:: ein sechster Verfahrensschritt,
- Figur 9:: ein abgewandeltes Ausführungsbeispiel im Vergleich zu den Figuren 3 bis 8, wobei der Handschuhkasten durch eine Kammer ersetzt ist.

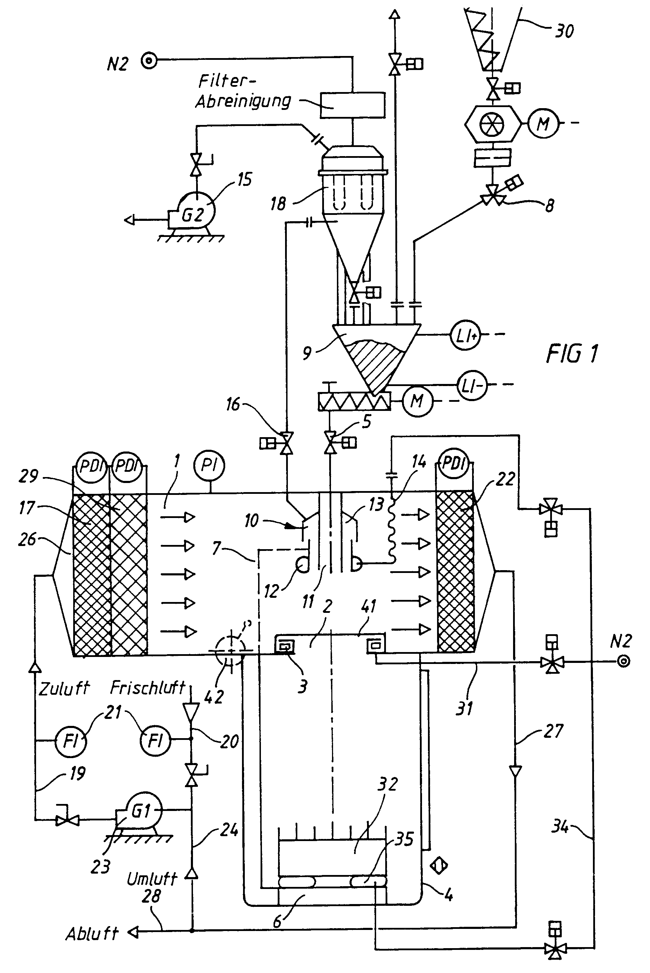

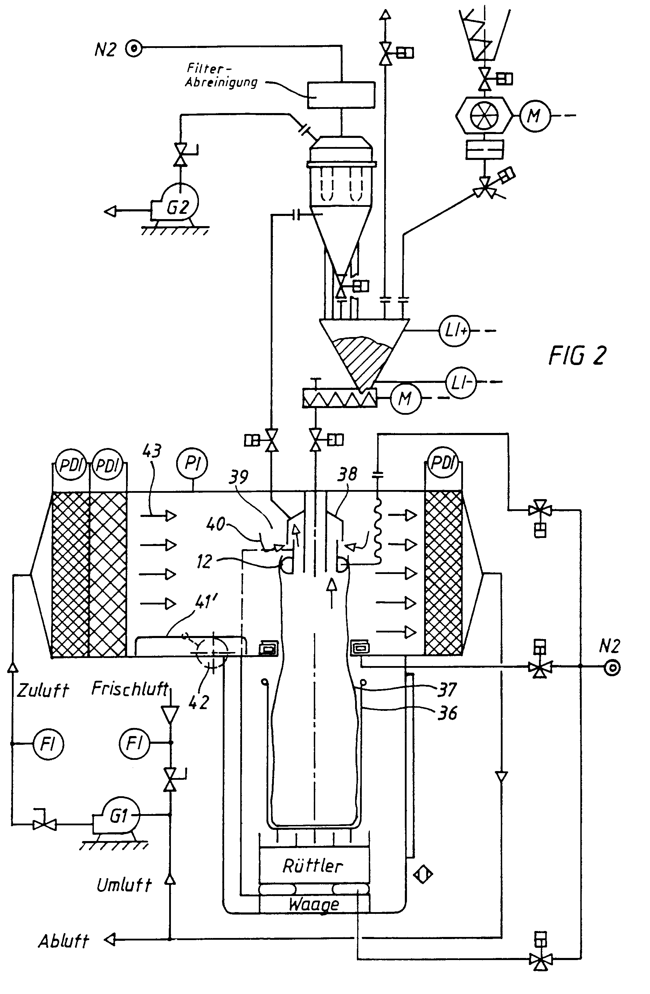

Anhand der Figuren 1 und 2 wird die Ausbildung eines neuartigen Handschuhkastens 1 beschrieben, in dem eine laminare Luftströmung in den Pfeilrichtungen 43,44 erzeugt wird. Hierbei wird in dem Handschuhkasten 1 ein Überdruck erzeugt, wobei gemäss Figur 1 die untere Öffnung 2 im Handschuhkasten 1 durch einen Schwingdeckel 41 verschlossen ist.

In dem Verfahrensschritt nach Figur 1 ist an der Unterseite der Öffnung 2 eine Waage 6 angeordnet, auf der über Hebekissen 35 ein Rüttler 32 angeordnet ist.

Der Schwingdeckel 41 ist über eine Abdichtvorrichtung 3 hermetisch dicht mit der Öffnung 2 verbunden.

Die Luftführung in der Kammer erfolgt so, daß in einen Einblasraum 26 des Handschuhkastens 1 eine Leitung 19 mündet, über die von einem Gebläse 23 Reinluft eingeblasen wird, die aus einer Leitung 24 und 27 entnommen wird.

Im Abzweig zu der Leitung 24 kann Frischluft 20 dem Gebläse 23 als Teilstrom zugeführt werden, wobei die in den Handschuhkasten 1 eingeblasenen Luftströme durch entsprechende Volumenstrommesser 21 erfasst werden.

Im Einblasraum 26 ist ein Vorfilter 17 angeordnet, dem ein Hauptfilter 29 nachgeschaltet ist.
Nachdem die beiden Filter 17,29 den gesamten Querschnitt der Kammer ausfüllen, wird hiermit eine laminare Luftströmung in den Pfeilrichtungen 43 erzeugt, welche einen in die Kammer ragenden Füllkopf 10 umströmt.

Den Filtern 17,29 (sowie einem Abluftfilter 22) sind Meßanordnungen zugeordnet, mit denen der Druckverlust an dem Filter erfassbar ist, um die Austauschintervalle zu bestimmen.

Der Füllkopf 10 besteht im wesentlichen aus einem innenliegenden Füllrohr 11, welches in dem oberen Teil von einem Absaugkopf 38 radial umgeben ist. In diesen Absaugkopf 38 mündet ein Absaugstutzen 13, aus dem über die Leitung 16 ein Luftstrom abgesaugt wird, der in ein Hauptfilter 18 geleitet wird, welches mit einem Gebläse 15 verbunden ist. Der beim Abfüllvorgang im Absaugkopf 38 entstehende Medienstrom wird in dem Hauptfilter 18 abgeschieden und wieder in die Dosiereinrichtung 9 zurückgeführt.

Vom Auslauf eines Mischers 30, in dem das abzufüllende Medium enthalten ist, führt ein Auslaufventil 8 zu der Dosiereinrichtung 9, wo das abzufüllende Medium über Dosierschnecke einem Schnellschluß-Schieber 5 zugeführt wird.

Am Aussenumfang des Füllrohres 11 ist im Bereich eines weiteren Rohres eine aufblasbare Dichtung 12 angeordnet.

Die aufblasbare Dichtung 12 wird von einer Leitung 14 mit Druckmedium versorgt.

Wie eingangs ausgeführt wird die Luft in dem Handschuhkasten in horizontaler Richtung in den Pfeilrichtungen 43,44 laminar geführt, wobei der Luftstrom im Umluftbetrieb geführt wird und hierbei ein bestimmter Abluftstrom über die Leitung 28 entfernt werden kann.

Über die Leitung 31 wird die Abdichtvorrichtung 3 mit Druckmedium versorgt.

Die Figur 2 zeigt bereits schon einen weiter fortgeschrittenen Zustand des Abfüllvorganges, wo dargestellt ist, daß auf dem Rüttler 32 ein Fass 36 gestellt wird, in welchem ein Sack 37 angeordnet ist, dessen Oberteil durch manuellen Eingriff in die nicht näher dargestellten Öffnungen des Handschuhkastens 1 nach oben gezogen wurde, so daß der Rand des Sackes 37 abdichtend an der mit Druckmedium beaufschlagten Dichtung 12 angeschlossen ist.

In dieser Stellung erfolgt die Befüllung des Sackes 37 unter Reinluftbedingungen, wobei der Füllkopf 10 ständig von der laminaren Strömung in den Pfeilrichtungen 43,44 umgeben ist. Hierbei erfolgt gleichzeitig eine Durchströmung des Absaugkopfes 38, wo Reinluft aus dem Handschuhkasten 1 in den Pfeilrichtungen 40 über Öffnungen 39 aus dem Reinluftraum in den Absaugkopf 38 geführt wird und die entstehende Absaugluft über die Leitung 16 dem Hauptfilter 18 zugeführt wird.

Hierbei wird das Fass 36 abdichtend an die Unterseite der Öffnung 2 herangefahren, indem die Hebekissen 35 über die Leitung 34 mit Druck beaufschlagt werden.

Zum Befüllen des Sackes wird vorher die Öffnung 2 freigemacht, indem der Schwingdeckel 41 in seine Stellung 41' mit Hilfe eines Hebels 42 verschwenkt wird.

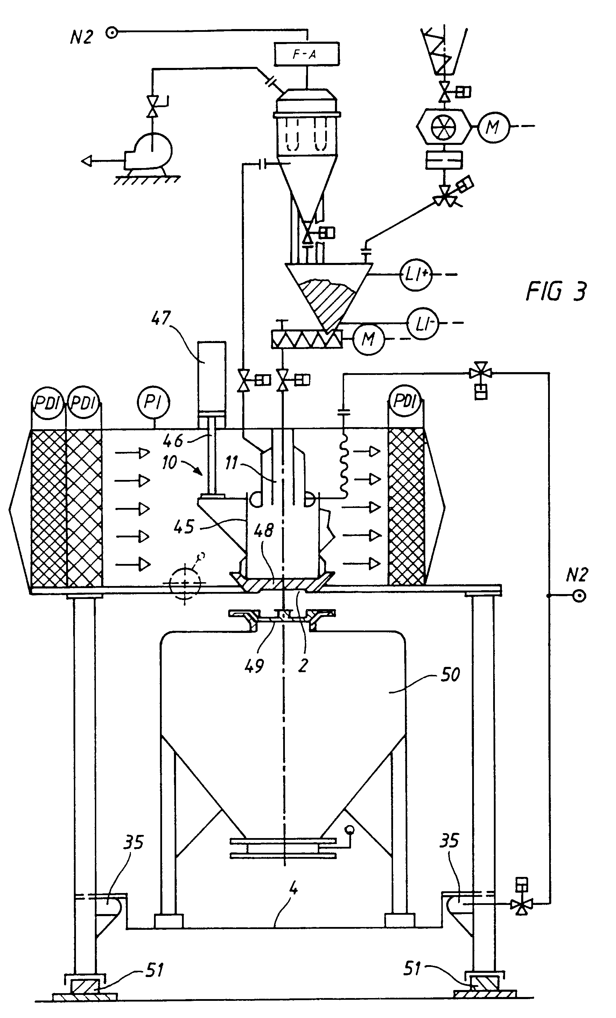

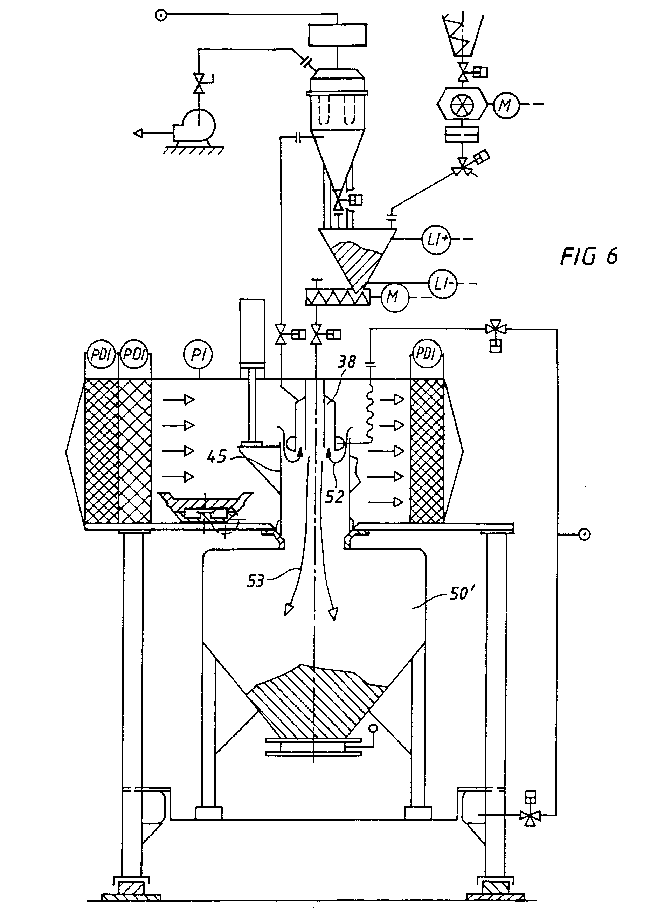

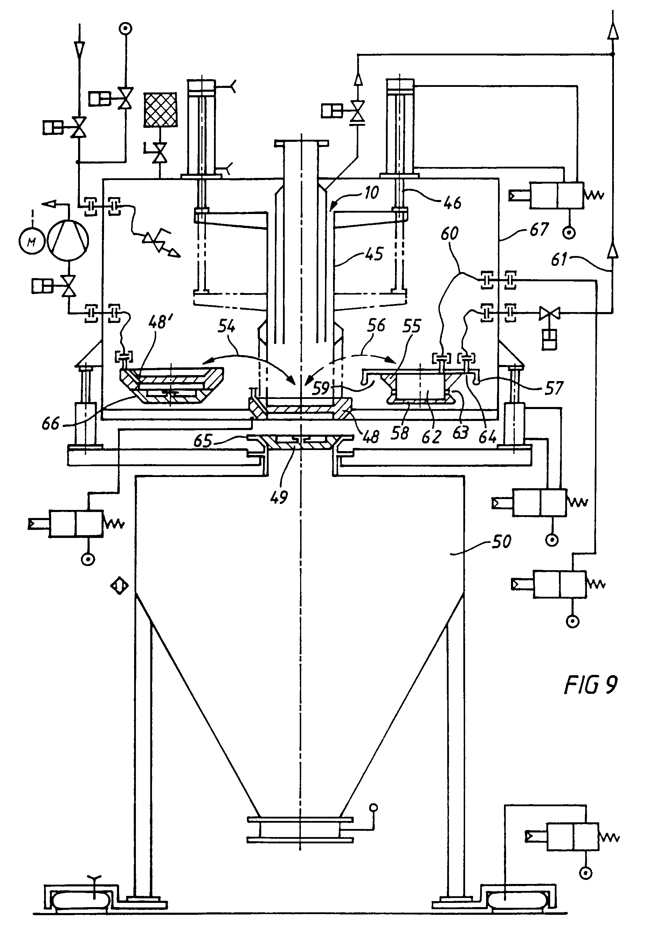

Anhand der Figuren 3 bis 9 wird nun ein neuartiges Abfüllsystem dargestellt, welches einen neuartigen Füllkopf 10 betrifft, wobei dargestellt ist, daß dieses Abfüllsystem mit einem Handschuhkasten 1 nach den Figuren 1 bis 2 verwendet werden kann (vergl. Figuren 3 bis 8) oder der Handschuhkasten 1 kann entfallen und es kann stattdessen nur eine dichte Kammer 67 vorgesehen werden (vergl. Figur 9).

Ansonsten gelten für die gleichen Teile der Figuren 1 bis 2 die gleichen Erläuterungen.

Der Einfachheit halber wurden diese Teile nicht mehr in den Figuren 3 bis 9 bezeichnet, weil die vorstehend gegebene Erläuterung gilt.

Wenn man mit einem Handschuhkasten 1 oder mit einer Kammer 67 einen feststehenden Behälter 50 abfüllen will, dann ist es nicht mehr möglich, durch Eingriff in Öffnungen eines Handschuhkastens oder einer Kammer entsprechende Abfüllvorgänge einzuleiten, weil ein anzuhebender und zu manipulierender Sack fehlt.

Es ist deshalb erforderlich, eine Doppeltürverschlußanordnung zu schaffen, bei der ein Befüllen eines Behälters 50 ohne manuellen Eingriff gelingt, was nachfolgend beschrieben wird.

Unter "manueller Hilfe" wird hierbei die Manipulation an dem abzufüllenden Sack verstanden, die bei einem feststehenden Behälter oder Fass nicht mehr möglich ist.

Erfindungsgemäss ist vorgesehen, daß am Aussenumfang des Füllkopfes 10 ein heb- und senkbar ausgebildetes Teleskopfrohr 45 angeordnet ist, welches über eine Kolben-Zylinder-Anordnung 46,47 heb- und senkbar ausgebildet ist.

Gemäss Figur 3 greifen zwei Kolbenstangen 46 am Außenumfang eines Teleskoprohres 45 an, welche Kolbenstangen 46 heb- und senkbar in den zugeordneten Zylindern 47 angeordnet sind.

Die Öffnung 2 des Handschuhkastens 1 ist hierbei durch einen oberen Verschlußdeckel 48 verschlossen, der nun erfindungsgemäss durch das Teleskoprohr 45 betätigt wird.

Das Teleskoprohr 45 ist hierbei in der heruntergefahrenen Stellung dargestellt, und hält den Verschlußdeckel 48 in seiner Schließposition.

Eine mechanische Kopplung ist hierbei nicht erforderlich.

Der zu befüllende Behälte 50 ist hierbei in einem Gestell 4 gelagert, welches Gestell über die Hebekissen 35 heb- und senkbar ausgebildet ist.
Der Handschuhkasten 1 lagert über einem eigenen Gestell auf Wiegezellen 51. Statt der Anordnung von Wiegezellen 51 kann noch eine volumetrische Bestimmung des Füllgutes im Behälter 50 erfolgen, wobei dann die Wiegezellen 51 entfallen.

In der in Figur 3 dargestellten Stellung ist der Behälter 50 mit einem unteren Verschlußdeckel 49 abdichtend verschlossen.

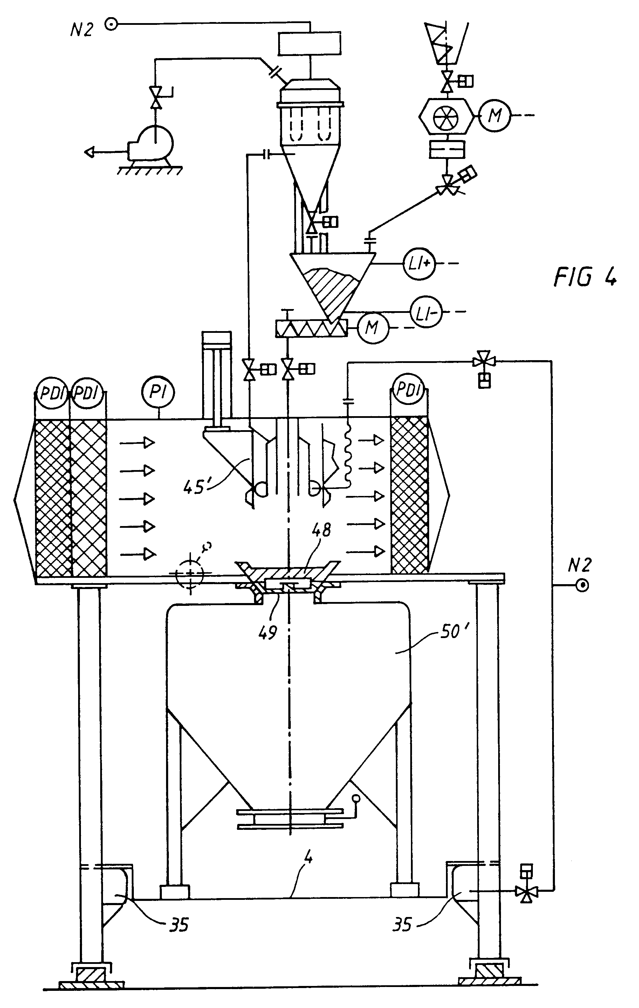

Um den Behälter 50 zu befüllen, werden die Hebekissen 35 gemäss Figur 4 angesteuert und der Behälter wird in seiner Bestellung 50' nach oben gefahren, wobei die beiden Verschlußdeckel 48,49 in Berührungskontakt kommen.

In dem Zwischenraum zwischen den beiden Verschlußdeckeln 48,49 wird nun Vakuum angelegt, um diese beiden Deckel 48,49 ansaugen zu lassen und diese miteinander zu kuppeln. Statt der Kupplung über Vakuum gibt es selbstverständlich auch mechanische oder magnetische Kupplungen.

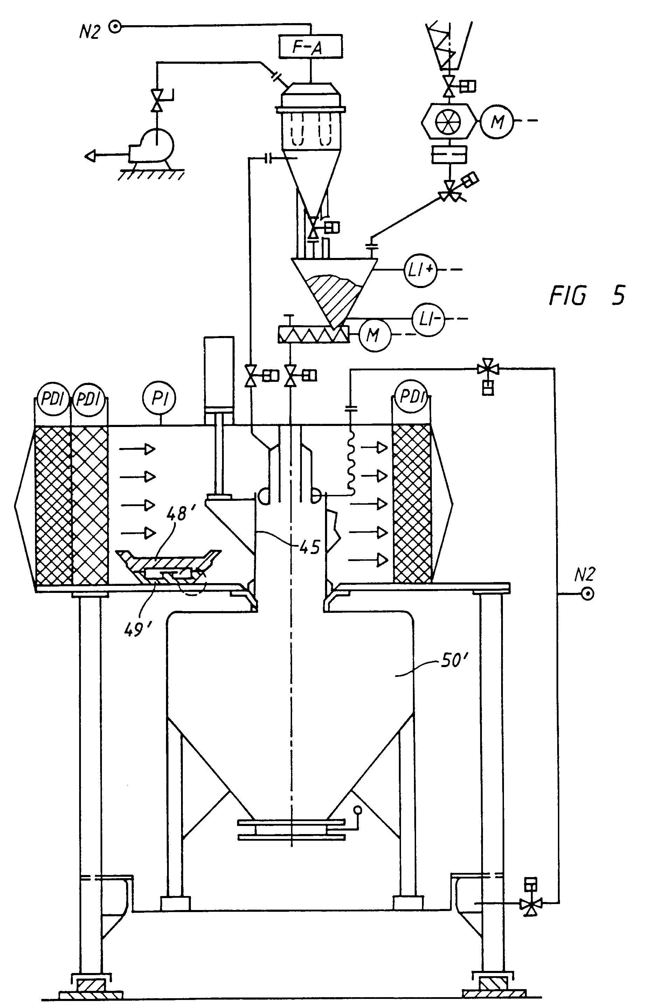

Gemäss Figur 5 werden dann die beiden miteinander gekuppelten Deckel 48,49 in ihre Stellungen 48',49' bewegt, nämlich seitlich zur Öffnung 2, wobei hierbei ein mechabetätigtes Schiebesystem oder ein elektromotorisches oder pneumatisch betätigtes Verschiebesystem verwendet werden kann.

Das Teleskoprohr 45 wird im Vergleich zu Figur 4 wieder nach unten gefahren, so daß seine radial aussenliegende Ringdichtung abdichtend zu der zugeordneten Dichtung an der Oberseite des Behälters 50' abdichtet, wobei eine Abdichtung an der Öffnung 2 selbst nicht erforderlich ist.

Es erfolgt nun eine Einleitung des abzufüllenden Mediums in den Behälter 50', wobei er am Füllkopf 10 angeordnete Absaugkopf 38 mit Reinluft in den Pfeilrichtungen 52 gespült wird und gleichzeitig das Medium als Produktstrom 53 in den Behälter 50' einfließt.

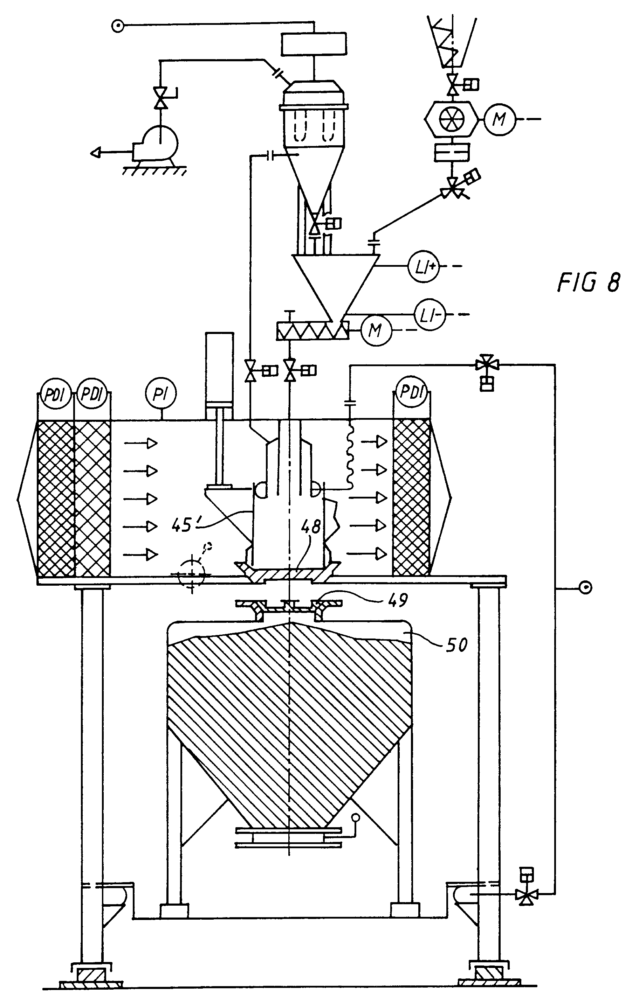

Nach erfolgter Befüllung des Behälters 50' werden die beiden miteinander verbundenen 48,49 wieder in ihre Verschlußposition auf der Öffnung 2 gebracht, und das Vakuum zwischen den beiden Deckeln wird gebrochen, so daß diese wiederum voneinander trennbar sind.
Die Trennung ist in Figur 8 dargestellt, wo das Teleskoprohr 45 wieder in seiner heruntergefahrenen Stellung (45') gefahren ist und den oberen Verschlußdeckel 48 abdichtend auf der Öffnung 2 hält. Gleichzeitig wurde der untere Verschlußdeckel 49 auf dem Behälter 50 aufgesetzt und dicht mit diesem verschlossen.

Die Figur 9 zeigt nun, daß anstatt der Anordnung eines Handschuhkastens 1 mit einer entsprechenden Reinluftatmosphäre auch eine einfache hermetisch abgedichtete Kammer 67 verwendet werden kann. Auch in dieser Kammer ist der Füllkopf 10 im erfindungsgemässen Teleskoprohr 45 versehen und es sind dieselben Verfahrensschritte dargestellt, wie sie anhand der Figuren 3 bis 8 dargestellt wurden.

Es ist erkennbar, daß der obere Verschlußdeckel 48 in seine Stellung 48' bringbar ist und es ist als zusätzliches Merkmal erkennbar, daß ein Reinigungsdeckel 55 vorhanden ist, der in den Pfeilrichtungen 56 in eine abseits der Öffnung 2 angeordnete Position sowie in eine die Öffnung 2 verschließende Position gebracht werden kann.

Der Reinigungsdeckel 55 dient zur Reinigung des umlaufenden Randes der Öffnung 2 in der Kammer 67 und kann auch zur Reinigung der Öffnung 2 im Handschuhkasten 1 verwendet werden.

Der Reinigungsdeckel 55 wird mit einer aussenliegenden Dichtung 57 auf dem umlaufenden Rand um die Öffnung 2 abdichtend aufgesetzt, wobei eine untere Dichtung 58 auf dem Öffnungsrand des Stutzens des Behälters 50 anliegt.

Es wird nun ein Reinigungsmedium, bevorzugt ein Gas, über die Leitung 60 in den Innenraum 62 des Reinigungsdeckels 55 geführt, welches Gas über die tangential angeordneten Öffnungen 63 in einen Reinigungsraum 59 strömt, welcher als Ringraum radial innenliegend zu dem umlaufenden Rand der Öffnung 2 liegt.
In diesem Reinigungsraum 59 wird eine tangentiale Wirbelströmung erzeugt und damit alle am Rand der Öffnung 2 anhaftenden Verschmutzungen sowie am Behälterstutzen des Behälters 50 anhaftenden Verschmutzungen entfernt. Diese Verschmutzungen werden über die Öffnungen 64 und die Leitung 61 nach aussen abgeleitet.

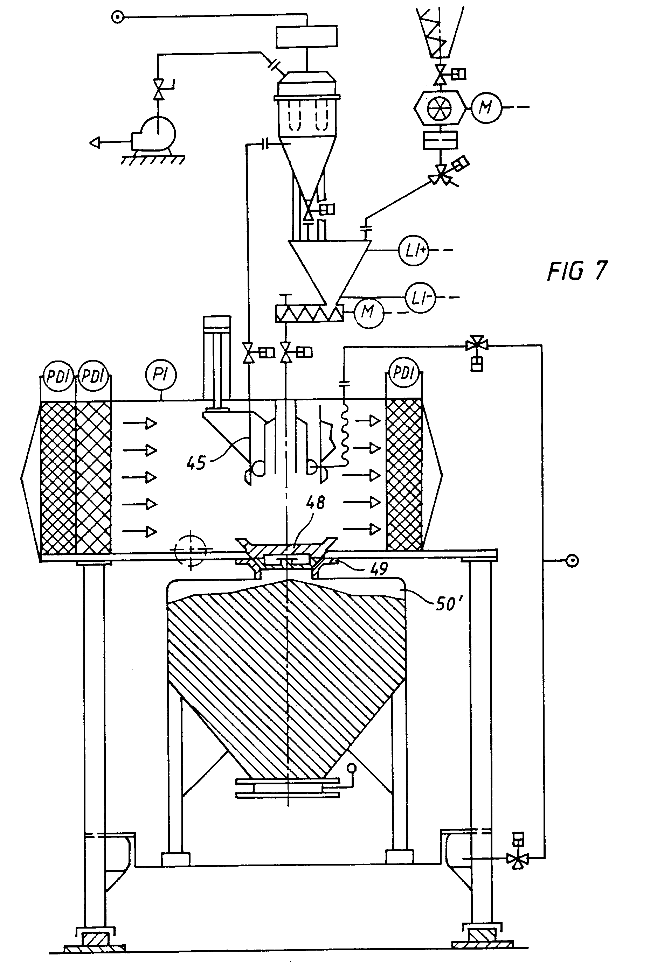

Es wird noch hinzugefügt, daß der Verschlußdeckel 48 radial aussenliegende Deckeldichtungen 66 aufweist, während der auf dem Behälter 50 liegende Verschlußdeckel 49 radial aussenliegende Stutzendichtungen 65 aufweist. Diese Dichtungen kommen in Dichtungseingriff, z.B. im in Figur 7 gezeigten Zustand.

### ZEICHNUNGSLEGENDE:

- 1: Handschuh-Kasten
- 2: Öffnung
- 3: Abdichtvorrichtung
- 4: Gestell (oder Kammer)
- 5: Schnellschluß-Schieber
- 6: Waage
- 7: Füllkopf-Auflager
- 8: Auslaufventil
- 9: Dosiereinrichtung
- 10: Füllkopf
- 11: Füllrohr
- 12: aufblasbare Dichtung
- 13: Absaugstutzen
- 14: Leitung
- 15: Gebläse
- 16: Leitung
- 17: Vorfilter
- 18: Hauptfilter
- 19: Leitung
- 20: Leitung
- 21: Volumenstrommesser
- 22: Abluftfilter
- 23: Gebläse
- 24: Leitung
- 26: Einblasraum
- 27: Leitung
- 28: Leitung
- 29: Hauptfilter
- 30: Mischer
- 31: Leitung
- 32: Rüttler
- 34: Leitung
- 35: Hebekissen
- 36: Faß
- 37: Sack
- 38: Absaugkopf
- 39: Öffnung
- 40: Pfeilrichtung
- 41: Schwingdeckel 41'
- 42: Hebel
- 43: Pfeilrichtung
- 44: Pfeilrichtung
- 45: Teleskoprohr
- 46: Kolbenstange
- 47: Zylinder
- 48: oberer Verschlußdeckel 48'
- 49: unterer Verschlußdeckel
- 50: Behälter 50'
- 51: Wiegezelle
- 52: Pfeilrichtung
- 53: Produktstrom
- 54: Pfeilrichtung
- 55: Reinigungsdeckel
- 56: Pfeilrichtung
- 57: Dichtung
- 58: Dichtung
- 59: Reinigungsraum
- 60: Leitung (Zuführung)
- 61: Leitung (Abführung)
- 62: Innenraum
- 63: Öffnung (tangential)
- 64: Öffnung
- 65: Stutzendichtung
- 66: Deckeldichtung
- 67: Kammer

## Patentansprüche

1. Abfüllanlage für gefährliche schütt- oder fließfähige Medien, bei welcher das abzufüllende Medium am Auslauf einer Produktionsanlage in einem Handschuhkasten (1) mittels eines Füllrohres (11) proportioniert und abgepackt wird, wobei die Absackanlage durch einen abdichtenden Schwingdeckel (41, 41') zum Handschuhkasten (1) verschließbar ist, der Handschuhkasten (1) unter Überdruck gehalten ist und eine laminare Strömung von Reinluft im Handschuhkasten (1) vorhanden ist, die mindestens einen am Auslauf der Produktionsanlage angeordneten Füllkopf (10) umströmt, **dadurch gekennzeichnet,** daß eine Absaugvorrichtung vorgesehen ist, die das Medium transportierende Füllrohr (11) radial umgibt.

2. Abfüllanlage nach Anspruch 1, **dadurch gekennzeichnet,** daß der Füllkopf (10) so lange geschlossen ist, wie der zu befüllende Sack (37) nicht abdichtend am Füllkopf (10) angeschlossen ist.

3. Abfüllanlage nach Anspruch 1 bis 2, **dadurch gekennzeichnet,** daß sich zur Aufrechterhaltung der Reinluft mehrere hintereinander angeordnete Filter (17, 22, 29) über den gesamten Querschnitt des Handschuhkastens (1) erstrecken.

4. Abfüllanlage nach Anspruch 3, **dadurch gekennzeichnet,** daß an der Einströmseite der Reinluft ein Hauptfilter (29), dem ein Vorfilter (17) vorgeordnet ist und an der Abströmseite der Reinluft ein Abluftfilter (22) vorhanden ist.

5. Abfüllanlage nach Anspruch 4, **dadurch gekennzeichnet,** daß die Reinluftversorgung einen geschlossenen Kreislauf darstellt, der nach Bedarf an eine Frischluftzuführung anschließbar ist.

6. Abfüllanlage nach Anspruch 1 bis 5, **dadurch gekennzeichnet,** daß die Reinluftversorgung vertikal zum Füllkopf (10) angeschlossen ist und vertikale Filter (17, 22, 29) über den gesamten Querschnitt des Handschuhkastens (1) angeordnet sind.

7. Abfüllanlage nach Anspruch 1 bis 6, **dadurch gekennzeichnet,** daß der Füllkopf (10) radial von einem vertikal heb- und senkbaren Teleskoprohr (45) umgeben ist, das abdichtend mit einer abdichtenden Doppeltür-Verschluß-Einrichtung des Handschuhkastens (1) koppelbar ist, wobei die Doppeltür-Verschluß-Einrichtung aus einem oberen Verschlußdeckel (48) des Handschuhkastens (1) und einem unteren Verschlußdeckel (49) des abzufüllenden Behälters (50) besteht, die miteinander koppelbar sind.

8. Abfüllanlage nach Anspruch 7, **dadurch gekennzeichnet,** daß das heb- und senkbare Teleskoprohr (45) am Füllkopf (10) über eine Kolben-Zylinder-Anordnung (46,47) bedienbar ist.

9. Abfüllanlage nach Anspruch 7 bis 8, **dadurch gekennzeichnet,** daß der Handschuhkasten (1) eine einfache hermetisch abschließende Kammer darstellt.

10. Verfahren zum Betrieb einer Abfüllanlage nach einem der Ansprüche 7 bis 9, **dadurch gekennzeichnet,**
a) daß in der Ausgangsstellung der obere Verschlußdeckel (48) geschlossen ist und das Teleskoprohr (45) auf dem oberen Verschlußdeckel (48) aufliegt und diesen verschlossen hält,
b) daß der zu befüllende Behälter (50) auf Hebekissen (35) unterhalb des oberen Verschlußdeckels (48) angeordnet wird, so daß der untere Verschlußdeckel (49) unter dem oberen Verschlußdeckel (48) liegt, und das Teleskoprohr (45) gehoben wird,
c) daß die Hebekissen (35) aufgefüllt werden und der untere Verschlußdeckel (49) und der obere Verschlußdeckel (48) in Kontakt gebracht und gekoppelt werden,
d) daß die Doppeltür-Verschluß-Einrichtung von der Öffnung des Handschuhkastens (1) bewegt wird,
e) daß das Teleskoprohr (45) abdichtend an den zu befüllenden Behälter (50) gesenkt wird,
f) daß der Füllkopf (10) zur Befüllung des Behälters (50) geöffnet wird,
g) daß nach der Befüllung des Behälters (50) der Füllkopf (10) geschlossen, das Teleskoprohr (45) angehoben, die Doppeltür-Verschluß-Einrichtung auf die Öffnung des Handschuhkastens (1) geschoben, die Doppeltür-Verschluß-Einrichtung entkoppelt und das Teleskoprohr (45) in Ausgangsstellung auf den oberen Verschlußdeckel (48) abgesenkt wird.
h) daß die in einem Gebläse (23) erzeugte, durch eine Leitung (19) in einen Einblasraum (26) des Handschuhkastens (1) gelangende, durch die Filter (17, 29) in den Handschuhkasten (1) eingebrachte laminare Strömung von Reinluft (43, 44) während des gesamten Betriebs der Vorrichtung mindestens den Füllkopf (10) ständig umströmt und durch den Abluftfilter (22) über Leitungen (27, 24) wieder dem Gebläse (23) zugeführt oder über Leitungen (27, 28) die Vorrichtung als Abluft verläßt, daß eine, aus einem Absaugkopf (38) mit einem einmündenden Absaugstutzen (13) und einer mit diesem verbundenen Leitung (16) sowie einem in der Leitung (16) befindlichen Hauptfilter (18) mit einem zugeordneten Gebläse (15) bestehende Absaugvorrichtung das innenliegende Füllrohr (11) des Füllkopfes (10) in seinem oberen Teil radial umgibt, wobei während des gesamten Abfüllvorgangs der im Absaugkopf (38) entstehende Medienstrom in dem Hauptfilter (18) abgeschieden und wieder in die Dosiereinrichtung (9) zurückgeführt wird.

## Claims

1. Filling installation for hazardous pourable or flowable media, in which the medium to be filled is proportioned and packaged at the outlet of a production installation by means of a filling pipe (11) in a glove box (1), wherein the bag filling installation is closable to the glove box (1) by a sealable swing lid (41, 41'), the glove box (1) is held under overpressure and in the glove box (1) a laminar flow of clean air is present which flows around at least one filling head (10) arranged at the outlet of the production installation,
characterised in that a suction device is provided which radially surrounds the filling pipe (11) transporting the medium.

2. Filling installation according to claim 1,
characterised in that the filling head (10) is closed for as long as the bag (37) to be filled is not sealingly connected to the filling head (10).

3. Filling installation according to claim 1 to 2,
characterised in that for maintenance of the clean air several filters (17, 22, 29), arranged one behind the other, extend over the entire cross-section of the glove box (1).

4. Filling installation according to claim 3,
characterised in that on the inflow side of the clean air a main filter (29) is provided, which is preceded by a pre-filter (17), and on the outflow side of the clean air an exhaust air filter (22) is present.

5. Filling installation according to claim 4,
characterised in that the clean air supply represents a closed circuit which is connectable to a fresh air supply as required.

6. Filling installation according to claim 1 to 5,
characterised in that the clean air supply is connected vertically to the filling head (10) and vertical filters (17, 22, 29) are arranged over the entire cross-section of the glove box (1).

7. Filling installation according to claim 1 to 6,
characterised in that the filling head (10) is surrounded radially by a telescopic pipe (45) which can be vertically raised and lowered, which is sealingly connectable to a sealing double door closure device of the glove box (1), wherein the double door closure device consists of an upper closure lid (48) of the glove box (1) and a lower closure lid (49) of the container (50) to be filled, which are connectable to each other.

8. Filling installation according to claim 7,
characterised in that the telescopic pipe (45) which can be raised and lowered is operable at the filling head (10) by a piston-cylinder arrangement (46, 47).

9. Filling installation according to claim 7 to 8,
characterised in that the glove box (1) represents a simple hermetically sealed chamber.

10. Method for operating a filling installation according to one of the claims 7 to 9,
characterised in
a) that in the initial position the upper closure lid (48) is closed and the telescopic pipe (45) rests on the upper closure lid (48) and keeps this closed,
b) that the container (50) to be filled is arranged on lifting cushions (35) beneath the upper closure lid (48), so that the lower closure lid (49) lies beneath the upper closure lid (48), and the telescopic pipe (45) is raised,
c) that the lifting cushions (35) are filled and the lower closure lid (49) and the upper closure lid (48) are brought into contact and connected,
d) that the double door closure device is moved by the opening of the glove box (1),
e) that the telescopic pipe (45) is lowered sealingly on the container (50) to be filled,
f) that the filling head (10) is opened for filling the container (50),
g) that after filling the container (50) the filling head (10) is closed, the telescopic pipe (45) is raised, the double door closure device is pushed onto the opening of the glove box (1), the double door closure device is disconnected and the telescopic pipe (45) in initial position is lowered onto the upper closure lid (48),
h) that the laminar flow of clean air (43, 44), introduced via the filters (17, 29) into the glove box (1) and produced in a fan (23) reaching a flow-in chamber (26) of the glove box (1) through a pipe (19), flows constantly around at least the filling head (10) during the entire operation of the device and through the exhaust air filter (22) via pipes (27, 24) is again supplied to the fan (23) or leaves the device as exhaust air via pipes (27, 28), that a suction device, consisting of a suction head (38) with a feed-in suction connecting-piece (13) and a pipe (16) connected to the latter as well as a main filter (18) situated in the pipe (16) with an associated fan (15), radially surrounds the upper part of the inner filling pipe (11) of the filling head (10), wherein during the entire filling process the media stream produced in the suction head (38) is separated in the main filter (18) and fed back again to the metering device (9).

## Revendications

1. Installation de remplissage pour produits dangereux en vrac ou fluides, dans laquelle le produit de remplissage, à la sortie d'une installation de production, est proportionné dans une boite à gants (1) au moyen d'un tube de remplissage (11) et conditionné, l'installation d'ensachage pouvant être fermée vers la boite à gants (1) par un couvercle oscillant (41, 41') étanche, la boite à gants (1) étant maintenue sous pression et un écoulement laminaire d'air pur existant dans la boite à gants (1) et s'écoulant au moins autour d'une tête de remplissage (10) placée à la sortie de l'installation de production, **caractérisée** en ce qu'il est prévu un dispositif d'aspiration qui entoure radialement le tube de remplissage (11) transportant le produit considéré.

2. Installation de remplissage selon la revendication 1, **caractérisée** en ce que la tête de remplissage (10) est fermée aussi longtemps que le sac (37) à remplir n'est pas raccordé de manière étanche à la tête de remplissage (10).

3. Installation de remplissage selon les revendications 1 à 2, **caractérisée** en ce que pour conserver l'air pur, plusieurs filtres (17, 22, 29) disposés les uns à la suite des autres, s'étendent sur la totalité de la section de la boite à gants (1).

4. Installation de remplissage selon la revendication 3, **caractérisée** en ce que sur le côté de l'entrée de l'air pur existe un filtre principal (29) en amont duquel est placé un filtre primaire (17), et sur le côté de l'évacuation de l'air pur existe un filtre d'air d'échappement (22).

5. Installation de remplissage selon la revendication 4, **caractérisée** en ce que l'alimentation en air pur représente un circuit fermé qui, en cas de besoin peut être raccordé à une amenée d'air frais.

6. Installation de remplissage selon les revendications 1 à 5, **caractérisée** en ce que l'alimentation en air pur est raccordée verticalement à la tête de remplissage (10), et en ce que des filtres verticaux (17, 22, 29) sont disposés sur la totalité de la section de la boite à gants (1).

7. Installation de remplissage selon les revendications 1 à 6, **caractérisée** en ce que la tête de remplissage (10) est entourée radialement par un tube télescopique (45) pouvant être soulevé et abaissé verticalement, et pouvant être couplé de manière étanche à un mécanisme étanche de fermeture à double porte de la boite à gants (1), le mécanisme étanche de fermeture à double porte étant constitué d'un couvercle de fermeture supérieur (48) de la boite à gants (1) et d'un couvercle de fermeture inférieur (49) d'un récipient (50) à remplir, qui peuvent être couplés l'un à l'autre.

8. Installation de remplissage selon la revendication 7, **caractérisée** en ce que le tube télescopique (45) pouvant être soulevé et abaissé au niveau de la tête de remplissage, peut être manipulé par l'intermédiaire d'un agencement à piston et cylindre (46, 47).

9. Installation de remplissage selon les revendications 7 à 8, **caractérisée** en ce que la boite à gants (1) est réalisée par une simple chambre fermant de manière hermétique.

10. Procédé destiné à faire fonctionner une installation de remplissage selon l'une des revendications 7 à 9, **caractérisé**
a)en ce que dans la position initiale, le couvercle de fermeture supérieur (48) est fermé et le tube télescopique (45) repose sur le couvercle de fermeture supérieur (48) et le maintient fermé,
b)en ce que l'on dispose le récipient à remplir (50) sur des coussins de soulèvement (35) sous le couvercle de fermeture inférieur (48), de sorte que le couvercle de fermeture inférieur (49) se situe sous le couvercle de fermeture supérieur (48), et l'on soulève le tube télescopique (45),
c)en ce que l'on remplit les coussins de soulèvement (35), le couvercle de fermeture inférieur (49) et le couvercle de fermeture supérieur (48) étant amenés en contact réciproque et couplés,
d) en ce que le mécanisme de fermeture à double porte est déplacé par l'ouverture de la boite à gants (1),
e)en ce que l'on abaisse le tube télescopique (45) de manière étanche contre le récipient (50) à remplir,
f)en ce que l'on ouvre la tête de remplissage (10) pour remplir le récipient (50),
g)en ce qu'après le remplissage du récipient (50), on ferme la tête de remplissage (10), on soulève le tube télescopique (45), on fait coulisser le mécanisme de fermeture à double porte sur l'ouverture de la boite à gants (1), on réalise le découplage du mécanisme de fermeture à double porte et l'on abaisse le tube télescopique (45) en position initiale sur le couvercle de fermeture supérieur (48),
h)en ce que l'écoulement laminaire d'air pur (43, 44) engendré dans un ventilateur (23), parvenant par une conduite (19) dans une chambre d'insufflation (26) de la boite à gants (1) et envoyé dans la boite à gants (1) au travers des filtres (17, 29), s'écoule continuellement durant l'intégralité du fonctionnement du dispositif, au moins autour de la tête de remplissage (10), et est à nouveau ramené au ventilateur (23) au travers du filtre d'air d'échappement (22), par l'intermédiaire de conduites (27, 24), ou quitte le dispositif en tant qu'air d'échappement par l'intermédiaire de conduites (27, 28), et en ce qu'un dispositif d'aspiration constitué d'une tête d'aspiration (38) comprenant un embout d'aspiration (13) y débouchant et une conduite (16) reliée à ce dernier, ainsi qu'un filtre principal (18) se trouvant dans la conduite (16) et auquel est associé un ventilateur (15), entoure radialement, dans sa partie supérieure, le tube de remplissage (11) situé à l'intérieur de la tête de remplissage (10), l'écoulement de produit engendré dans la tête d'aspiration (38) étant soumis à une séparation dans le filtre principal (18), durant la totalité de l'opération de remplissage, et à nouveau recyclé dans le dispositif de dosage (9).
